# EUROPEAN PATENT APPLICATION

(11) **EP 2 439 525 A1**
(43) Date of publication of application: **11.04.2012**
(21) Application number: 10783281.8
(22) Date of filing: 24.05.2010
(51) Int. Cl.: G01N 27/62, G01N 27/64, G01N 30/06, G01N 30/72, G01N 30/88

(54) **METHOD FOR QUANTIFYING RED PHOSPHORUS IN RESIN**

(30) Priority: 03.06.2009 JP 2009134087
(71) Applicant: Sumitomo Electric Industries, Ltd., Chuo-ku Osaka-shi Osaka 541-0041 (JP)
(72) Inventor: IIDA, Masuo, Osaka-shi Osaka 554-0024 (JP)
(74) Representative: Setna, Rohan P.
(86) International application number: PCT/JP2010/058698
(87) International publication number: WO 2010/140497

(57) **Abstract**

The invention offers a method of quantitatively analyzing red phosphorus in a resin by the pyrolysis GCMS, the method having a further improved quantification accuracy. The method has the following steps: determining the retention time A of red phosphorus by performing pyrolysis GCMS measurement under a predetermined separating condition; determining the peak strength ratio B of the specimen to be measured by performing pyrolysis GCMS measurement to confirm that a peak of a mass spectrum is detected at the same retention time as the retention time A and by dividing the measured value of the peak area by the quantity of the specimen; confirming that when the height of the peak at an m/z of 124 in the mass spectrum is taken as 10, the height of the peak at an m/z of 62 lies in the 1.82-2.06 range and the height of the peak at an m/z of 93 lies in the 1.03-1.15 range; determining the relationship between the peak strength ratio C and the red-phosphorus content using multiple reference specimens under the same separating condition; and determining the quantity of the red phosphorus in the specimen to be measured by comparing the peak strength ratio B with the foregoing relationship.

## Description

### Technical Field

The present invention relates to a method of quantitatively analyzing red phosphorus in a resin (a resin composition) by pyrolysis gas chromatography/mass spectrometry (pyrolysis GCMS).

### Background Art

In recent years, considering the issue of environment, engineers have been using as the flame-retardant resin composition a non-halogen resin composition produced by adding a red-phosphorus-based flame retardant to a non-halogen resin (Patent Literature 1). Accordingly, the market and industry have been requiring the development of a method of analyzing red phosphorus that is useful, for example, in the quality control of a product containing a red-phosphorus-based flame retardant during its manufacture and at the time of its shipment and in the acceptance inspection for the purchaser of the product.

Red phosphorus does not dissolve in solvents so that it is difficult to perform separation for recovery. In addition, red phosphorus itself does not exhibit infrared absorption in an infrared spectrometer. Even when the red phosphorus added in a resin is analyzed by using a Raman spectrometer, the information on the red phosphorus cannot be recognized. Furthermore, red phosphorus cannot be distinguished from organic phosphorus through an elemental analysis, such as an energy-dispersive X-ray elemental analysis with the use of an energy-dispersive X-ray fluorescence analyzer. Consequently, when organic phosphorus, such as phosphate ester, is likely to be contained, red phosphorus cannot be analyzed. As a result, the above-described methods cannot analyze red phosphorus in a resin.

In view of the above circumstances, the present inventors have developed an analyzing method by the pyrolysis GCMS as a method of simply, speedily, and reliably analyzing red phosphorus, particularly the red phosphorus contained as a flame retardant in a resin. In this analyzing method, first, the specimen is gasified by using a pyrolysis gas chromatograph. Second, measurement is performed by the gas chromatography. Finally, a mass spectrometer is used as a means for detecting the fraction obtained by the gas chromatography. The developed analyzing method is proposed in the Japanese patent application Tokugan 2007-326840.

The method proposed in Tokugan 2007-326840 can quantify red phosphorus through the following process. First, a reference substance containing red phosphorus at a specified concentration is measured in advance by using the pyrolysis GCMS under a predetermined condition. The value of the area of the peak of the mass spectrum (or one or more ions) detected at the retention time corresponding to red phosphorus is determined. Based on this measured result, a calibration curve is produced. Subsequently, a specimen to be measured is measured to determine the value of the area of the peak of the mass spectrum (or one or more ions) detected at the same retention time under the same condition. The determined value is compared with the calibration curve to quantify the red phosphorus.

In the above description, the retention time corresponding to red phosphorus can be determined by performing measurement on a single substance of red phosphorus in advance by the pyrolysis GCMS under the same measuring condition. In addition, the indication that the mass spectrum on the peak detected at the retention time of the specimen to be measured has peaks at m/z's of 62, 93 and 124 can confirm that the retention time is the one that corresponds to red phosphorus.

### Citation List

### Patent Literature

Patent Literature 1: the published Japanese patent application Tokukai 2004-161924

### Summary of Invention

### Technical Problem

Despite the above description, a substance other than red phosphorus may not only have the same retention time as that corresponding to red phosphorus but also have peaks in the mass spectrum at the positions of the m/z's of 62, 93 and 124. When such a substance is contained in the specimen, the peak of the mass spectrum detected at the above-described retention time is formed by the superimposition of the peak of the foregoing substance and that of red phosphorus. Consequently, the value of the area of the peak does not correctly represent the amount of the red phosphorus. In other words, the correct quantification of the red phosphorus cannot be performed. To improve the accuracy of the quantification of red phosphorus so that a more correct and reliable quantification can be performed, it is necessary to obtain a method that can judge whether or not the peak at the retention time corresponding to red phosphorus includes the peak of a substance other than red phosphorus.

The present invention relates to a method of quantitatively analyzing red phosphorus in a resin by the pyrolysis GCMS. An object of the present invention is to offer a method that improves the accuracy of the quantification of red phosphorus by providing a step of judging whether the peak of the mass spectrum detected at the retention time corresponding to red phosphorus is derived from red phosphorus alone or is formed by including the peak of another substance.

### Solution to Problem

The present inventor, by diligently conducting the study for solving the foregoing problem, has attained the findings described below. When a mass spectrum derived from red phosphorus alone is measured by the electron impact ionization method (the EI method), the ratio of the peak strength between the m/z's of 124, 93, and 62 is approximately 10:1.09:1.94. Consequently, by judging whether or not the ratio of the peak strength between the m/z's of 124, 93, and 62 is approximately 10:1.09:1.94 in the mass spectrum detected at the retention time corresponding to red phosphorus, it is possible to judge whether the peak of the mass spectrum detected at the retention time corresponding to red phosphorus is derived from red phosphorus alone or is formed by including the peak of another substance. Thus, the present invention is completed.

As its first invention, the present invention offers a method for quantifying red phosphorus in a resin. The method has:
(a) a step 1 that determines a retention time A of red phosphorus by performing pyrolysis GCMS measurement on a red-phosphorus-containing specimen under a predetermined separating condition;
(b) a step 2 that determines a peak strength ratio B of a specimen to be measured by:
   weighing the specimen;
   performing pyrolysis GCMS measurement by the EI method under the same separating condition to confirm that a peak of a mass spectrum is detected at the same retention time as the retention time A; and
   dividing the measured value of the area of the peak by the quantity of the specimen;
(c) a step 3 that confirms that:
   the mass spectrum has peaks at m/z's of 62, 93 and 124; and
   when the height of the peak at an m/z of 124 is taken as 10, the height of the peak at an m/z of 62 lies in the range of 1.82 to 2.06 and the height of the peak at an m/z of 93 lies in the range of 1.03 to 1.15;
(d) a step that after the confirmation in the step 3, performs pyrolysis GCMS measurement under the same separating condition on a plurality of reference specimens each containing a predetermined quantity of red phosphorus to determine the relationship between a peak strength ratio C determined by dividing the measured value of the area of the peak by the quantity of the specimen and the content of the red phosphorus; and
(e) a step 4 that determines the quantity of the red phosphorus in the specimen to be measured by comparing the peak strength ratio B with the relationship between the peak strength ratio C and the red-phosphorus content.

In the quantifying method, first, on a red-phosphorus-containing specimen, the retention time A of red phosphorus is determined by performing pyrolysis GCMS measurement under a predetermined separating condition (the step 1). The red-phosphorus-containing specimen is a specimen that evidently contains a detectable quantity of red phosphorus. The specimen may either be a single substance of red phosphorus or a specimen formed of a resin containing red phosphorus. Nevertheless, to confirm that the retention time of the specimen coincides with that of red phosphorus, it is desirable to obtain a mass spectrum on the peak detected at the retention time of the specimen to confirm that the spectrum has peaks at m/z's of 62, 93, and 124. In particular, in the case of a specimen formed of a resin containing red phosphorus, there exists a peak derived from a substance other than red phosphorus. Accordingly, it is desirable to perform the foregoing confirmation.

After the determination of the retention time A of red phosphorus, the specimen to be measured is weighed (the quantity of the specimen). The specimen to be measured is subjected to pyrolysis GCMS measurement under the same separating condition to confirm that a peak of a mass spectrum is detected at the same retention time as the retention time A. When a peak of a mass spectrum is not detected at the same retention time as the retention time A, this result indicates that the content of red phosphorus is zero. Consequently, it is not necessary to carry out the subsequent steps. When a peak of a mass spectrum is detected at the same retention time, the measured value of the area of the peak of the mass spectrum (or one or more ions) is divided by the quantity of the specimen to determine the peak strength ratio B.

The quantifying method of the present invention has a feature in that it has the step 3. The step 3 confirms that the above-described mass spectrum has peaks at m/z's of 62, 93 and 124 and that when the height of the peak at an m/z of 124 is taken as 10, the height of the peak at an m/z of 62 lies in the range of 1.82 to 2.06 and the height of the peak at an m/z of 93 lies in the range of 1.03 to 1.15. The performing of the step 3 enables the judgment as to whether the peak of the mass spectrum detected at the retention time corresponding to red phosphorus is derived from red phosphorus alone or is formed by including the peak of another substance.

As shown in Reference example described below, a specimen containing red phosphorus alone was subjected to three times of pyrolysis GCMS measurement. The measured result showed that when the height of the peak at an m/z of 124 is taken as 10, the height of the peak at an m/z of 62 is 1.94 and the height of the peak at an m/z of 93 is 1.09. Each of the peaks has a variation of about 5% in height. With consideration given to the foregoing variation, when the measured result shows that when the height of the peak at an m/z of 124 is taken as 10, the height of the peak at an m/z of 62 lies in the range of 1.82 to 2.06 and the height of the peak at an m/z of 93 lies in the range of 1.03 to 1.15, it can be judged that the peak of the mass spectrum detected at the retention time corresponding to red phosphorus is derived from red phosphorus alone.

In other words, when the ratio of the peak heights does not lie in the above-described range, the peak of the mass spectrum is formed by including the peak of another substance. Consequently, in this case, the measured peak strength ratio cannot achieve an accurate quantification. To achieve the accurate quantification, the process from the step 1 to step 3 is repeated by changing the predetermined separating condition, such as the temperature-raising rate of the pyrolysis gas chromatography. The process from the step 1 to step 3 is repeated until the ratio of the peak heights comes to lie in the foregoing range.

After the confirmation that the ratio of the peak heights lies in the foregoing range is made in the step 3, under the same separating condition as that in the case where the above-described confirmation is made, pyrolysis GCMS measurement is conducted on a plurality of reference specimens each containing a predetermined quantity of red phosphorus. This measurement is carried out to determine the relationship between the peak strength ratio C determined by dividing the measured value of the area of the peak by the quantity of the specimen and the content of the red phosphorus, that is, to produce the calibration curve. The reference specimen is produced by pulverizing a red-phosphorus-containing compound that is produced by uniformly dispersing red phosphorus in a resin at a specified percentage. Because it is desirable that the quantity of the specimen for the pyrolysis GCMS be as extremely small as 0.1 to 0.5 mg or so, it is desirable to minutely pulverize the specimen such that the particle diameter becomes about 1 µm so that uniform dispersion can be secured.

After the calibration curve is produced, by comparing the peak strength ratio B with the calibration curve, the quantity of the red phosphorus in the specimen to be measured can be determined. The passing of the step 3 confirms that the peak strength ratio B is not affected by a substance other than red phosphorus. In other words, the peak strength ratio B accurately represents the content of red phosphorus. As a result, a highly accurate quantification can be achieved.

A second invention of the present invention further specifies the method for quantifying red phosphorus in a resin described in the first invention. In the second invention, in the step 3 of the first invention, it is confirmed that when the height of the peak at an m/z of 124 is taken as 10, the height of the peak at an m/z of 62 lies in the range of 1.92 to 1.96 and the height of the peak at an m/z of 93 lies in the range of 1.07 to 1.11. To achieve quantification having a further increased accuracy, it is desirable to confirm in the step 3 that when the height of the peak at an m/z of 124 is taken as 10, the height of the peak at an m/z of 62 lies in the range of 1.92 to 1.96 and the height of the peak at an m/z of 93 lies in the range of 1.07 to 1.11.

A third invention of the present invention further specifies the method for quantifying red phosphorus in a resin described in the first or second invention. In the third invention, the pyrolysis GCMS measurement is conducted by using a mass spectrometer having an ion source that employs an EI method as the ionization method and by using an ionization voltage of 1 to 100 eV. When the ionization voltage is low, the sensitivity tends to be insufficient. On the other hand, when the ionization voltage is excessively high, a number of fragment ions derived from the resin are produced, increasing the possibility that the peak formed of these ions is superimposed on the peak derived from the red phosphorus.

### Advantageous Effects of Invention

The present invention offers a method of quantitatively analyzing red phosphorus in a resin by the pyrolysis GCMS. The invented method provides a step of judging whether the peak of the mass spectrum detected at the retention time corresponding to red phosphorus is derived from red phosphorus alone or is formed by including the peak of another substance. As a result, in comparison with the conventional method that does not provide the foregoing step, the invented method enables the performing of the quantification of red phosphorus with an improved accuracy.

### Description of Embodiments

An explanation is given below to embodiments for carrying out the present invention. The scope of the present invention is not limited to the below-described embodiments.

In the pyrolysis GCMS measurement, first, the specimen is gasified by using a pyrolysis gas chromatograph. Second, measurement is performed by the gas chromatography. Finally, a mass spectrometer is used as a means for detecting the fraction obtained by the gas chromatography. This method is used for the measurement of all of the red-phosphorus-containing specimen, the specimen to be measured, and the reference specimen. The quantity of specimen is 0.05 to 10 mg, desirably 0.1 to 0.5 mg or so. When the quantity of specimen is excessively small, an accurate quantification tends to be difficult to achieve. When the quantity of specimen is excessively large, problems are likely to be created, such as the contamination of the detector.

The step of gasifying the specimen through the pyrolysis is conducted by heating the specimen at a temperature not lower than the temperature at which the specimen is gasified. Consequently, the heating temperature is not lower than the sublimation temperature of red phosphorus (416°C). Nevertheless, in order to perform a highly accurate analysis by reliably sublimating the red phosphorus in the resin, it is necessary to conduct the heating at a temperature not lower than the decomposition temperature of the resin. It is desirable to conduct the heating at a temperature of 600°C to 800°C or so.

The heating time must be not shorter than the time necessary to gasify the specimen completely. The heating time varies with the heating temperature, the quantity of specimen, and so on and is not particularly limited. The heating means is not particularly limited, and the heating means used in the ordinary pyrolysis gas chromatograph can be used.

The thermally decomposed and gasified specimen is introduced into the column of the gas chromatograph, the individual constituents of the specimen are separated according to the difference in the distribution equilibrium constant with the stationary phase, and the individual constituents flow out at different times (retention times). The conditions of the gas chromatograph are the same as those of the ordinary pyrolysis gas chromatograph used for the analysis of resins.

As for the column, both the packed column and the capillary column can be used. It is desirable to use the capillary column for qualitative analysis.

The specimen having left the column of the gas chromatograph is introduced into a mass spectrometer (MS), which is a detector. When there exists a detected peak (a fraction) at the retention time corresponding to red phosphorus, the presence of red phosphorus in the specimen is proved.

The mass spectrometer is composed of an interface, which is a portion to be connected to the column of the gas chromatograph, an ion source that ionizes the specimen, a mass separation portion, a detector, and so on. In the present invention, the ionization in the ion source is performed by the EI method. It is more desirable to perform the ionization at 50 to 100 eV.

As for the analyzer of the mass separation portion, both the magnetic sector type and the quadrupole type can be used. As for the measuring mode in the detector, both the SCAN mode and the SIM mode can be used.

The reference specimen for producing the calibration curve is produced as follows. First, red phosphorus is uniformly dispersed in the resin at a specified percentage to produce a red-phosphorus-containing compound. The compound is then pulverized and weighed.

To produce the red-phosphorus-containing compound, it is necessary to perform the blending (kneading) so that the red phosphorus can be sufficiently uniformly dispersed in the resin. The blending (kneading) operation must be conducted under the condition that the red phosphorus is prevented from subliming. More specifically, the blending must be performed at a temperature of 400°C or below, which is the sublimation temperature of red phosphorus, and not lower than the temperature at which the resin can be melted (the melting point).

The quantity of the red phosphorus to be kneaded with the resin is determined as appropriate in accordance with the measuring range of the concentration of the red phosphorus in the specimen. For example, when the concentration of the red phosphorus in the specimen to be measured is anticipated to be in the range of 100 to 1,000 ppm, the quantities of the red phosphorus are determined according to the selected several points in the range (for example, 100, 300, 500, 700, and 1,000 ppm) so that the calibration curve can be produced in the range of 100 to 1,000 ppm.

Because the quantity of the specimen is as extremely small as 0.1 to 0.5 mg or so, it is desirable to minutely pulverize the specimen so that uniform dispersion can be secured. More specifically, it is desirable to perform the pulverization such that the average particle diameter becomes 5 µm or less.

The type of resin to be used and the blending method are not particularly limited on condition that the uniform kneading is secured and the obtained compound is pulverized to produce a specimen that can be used for the pyrolysis GCMS. The types of blending methods include the methods each of which uses a press kneader, a roll mixer, a twin-screw mixer, or a Banbury mixer. The types of resins to be used include thermoplastic resin, thermosetting resin, rubber, and another resin.

The types of thermoplastic resin include polyethylene, polypropylene, polymethylpentene, polybutene, crystalline polybutadiene, polystyrene, polybutadiene, styrene-butadiene resin, polyvinyl chloride, polyvinyl acetate, polyvinylidene chloride, ethylene-vinyl acetate copolymers (EVA, AS, ABS, an ionomer, AAS, and ACS), polymethylmethacrylate, polytetrafluoroethylene, an ethylene-tetrafluoroethylene copolymer, polyoxymethylene, polyamide, polycarbonate, polyphenylene ether, polyethylene terephthalate, polybutylene terephthalate, polyarylate (a U polymer), polystyrene, polyether sulfone, polyimide, polyamideimide, polyphenylene sulfide, polyoxybenzoyl, polyether ether ketone, polyether imide, cellulose acetate, cellulose acetate butyrate, cellophane, and celluloid. In addition, elastomers can also be used, such as a styrene-butadiene-based thermoplastic elastomer, a polyolefin-based thermoplastic elastomer, a urethane-based thermoplastic elastomer, a polyester-based thermoplastic elastomer, and a polyamide-based thermoplastic elastomer.

The types of thermosetting resin include formaldehyde resin, phenol resin, amino resins (urea resin, melamine resin, and benzoguanamine resin), unsaturated polyester resin, diallyl phthalate resin, alkyd resin, epoxy resin, urethane resin (polyurethane), and silicon resin (silicone).

Reference example

A single substance of red phosphorus was weighted as the specimen. The specimen was thermally decomposed (gasified) with the below-described thermally decomposing device under the condition described below. The gasified specimen was examined with a gas chromatograph/mass spectrometry (a GC/MS apparatus). The value of peak area was measured on the peaks at m/z's of 62, 93, and 124 to calculate the value of peak area/the weight of specimen (hereinafter referred to as "peak strength ratio").

### Condition for thermal decomposition

The device made by Frontier Laboratories Ltd. was used. The thermal decomposition was performed at 600°C for 0.2 minutes.

### GC/MS apparatus

Agilent 6890 made by Agilent Technologies Inc. was used. The operating condition of this apparatus was as follows:
Column: HP-5MS (inner diameter: 0.25 mm; membrane thickness: 0.25 µm; length: 30 m)
Column flow rate: He gas; 1.0 ml/min
Temperature-raising condition: The temperature was raised at 25°C/min from 50°C to 320°C and maintained for 5 minutes at 320°C.
MS temperature: 230°C (MS Source); 150°C (MS Quad)
Interface temperature: 280°C
Measuring mode: SCAN mode
Ionization method: EI method.
In addition, the measurement by the mass spectrometry (MS) was conducted at an m/z range of 33 to 550 in order to avoid the peak of oxygen.

The measurement was performed three times. The results are shown in Table I.

**Table I.**

| | | m/z=124 | m/z=93 | m/z=62 |
|---|---|---|---|---|
| Value of peak area/weight of specimen (mg) | n = 2 | 5139557820 | 551142890 | 987737810 |
| | n = 2 | 5338779991 | 586449073 | 1044831173 |
| | n = 3 | 5598890075 | 612509942 | 1088744150 |
| Average | | 5359075962 | 583367301 | 1040437711 |
| Standard deviation | | 230337741 | 30799379 | 50646294 |
| c v | | 4. 30% | 5. 28% | 4. 87% |

As can be seen from Table I, in the average value determined from three measurements, when the height of the peak at an m/z of 124 is taken as 10, the height of the peak at an m/z of 62 is 1.94 and the height of the peak at an m/z of 93 is 1.09. Each of the peaks has a variation of about 5% in height. With consideration given to the foregoing variation, it can be concluded that in the peak derived from red phosphorus alone, when the height of the peak at an m/z of 124 is taken as 10, the height of the peak at an m/z of 62 lies in the range of 1.82 to 2.06 and the height of the peak at an m/z of 93 lies in the range of 1.03 to 1.15.

## Claims

1. A method for quantifying red phosphorus in a resin, the method comprising:
(a) a step 1 that determines a retention time A of red phosphorus by performing pyrolysis GCMS measurement on a red-phosphorus-containing specimen under a predetermined separating condition;
(b) a step 2 that determines a peak strength ratio B of a specimen to be measured by:
weighing the specimen;
performing pyrolysis GCMS measurement under the same separating condition to confirm that a peak of a mass spectrum is detected at the same retention time as the retention time A; and
dividing the measured value of the area of the peak by the quantity of the specimen;
(c) a step 3 that confirms that:
the mass spectrum has peaks at m/z's of 62, 93 and 124; and
when the height of the peak at an m/z of 124 is taken as 10, the height of the peak at an m/z of 62 lies in the range of 1.82 to 2.06 and the height of the peak at an m/z of 93 lies in the range of 1.03 to 1.15;
(d) a step that after the confirmation in the step 3, performs pyrolysis GCMS measurement under the same separating condition on a plurality of reference specimens each containing a predetermined quantity of red phosphorus to determine the relationship between a peak strength ratio C determined by dividing the measured value of the area of the peak by the quantity of the specimen and the content of the red phosphorus; and
(e) a step 4 that determines the quantity of the red phosphorus in the specimen to be measured by comparing the peak strength ratio B with the relationship between the peak strength ratio C and the red-phosphorus content.

2. The method for quantifying red phosphorus in a resin as defined by claim 1, wherein in the step 3, it is confirmed that when the height of the peak at an m/z of 124 is taken as 10, the height of the peak at an m/z of 62 lies in the range of 1.92 to 1.96 and the height of the peak at an m/z of 93 lies in the range of 1.07 to 1.11.

3. The method for quantifying red phosphorus in a resin as defined by claim 1 or 2, wherein the pyrolysis GCMS measurement is conducted by using a mass spectrometer having an ion source that employs an electron impact ionization method (an EI method) as the ionization method and by performing the ionization at 1 to 100 eV.
